# EUROPEAN PATENT APPLICATION

(11) **EP 1 868 160 A2**
(43) Date of publication of application: **19.12.2007**
(21) Application number: 07250748.6
(22) Date of filing: 22.02.2007
(51) Int. Cl.: G06T 7/00, A61B 5/00

(54) **Considerations when colon segmentation differs between CAD processing and visualization**

(30) Priority: 13.06.2006 US 451719
(71) Applicant: iCad, Inc., Beavercreek, Ohio 45431 (US)
(72) Inventor: Woods, Kevin S., Beavercreek Ohio 45431 (US); Collins, Michael J., Beavercreek Ohio 45431 (US); McGinnis, Ryan Edward, Tipp City Ohio 45371 (US)
(74) Representative: Cummings, Sean Patrick

(57) **Abstract**

A system and method for preserving CAD marks falling outside the three-dimensional rendering on a visualization display following segmentation of CT medical image slices for review by a user is disclosed. The CT medical images are processed by both a CAD algorithm and a visualization workstation. The CAD algorithm reports detected suspicious regions to the visualization workstation for display on the three-dimensional rendering of the medical images as well as creates a list of the detections to notify the user. If the detected CAD marks are not located on the three-dimensional rendering of the medical images, the user is notified. The user can the view the detected CAD marks on the two-dimensional CT medical images.

## Description

### BACKGROUND OF THE INVENTION

The present invention generally relates to a method and system for processing medical image data and, in particular, relates to a method and system for processing medical image data in which different applications share intermediate processing results.

Many different applications for processing medical image data exist and are used today. For example, there is visualization software in which the medical image is presented for review by a medical professional on a workstation display, or computer monitor. In addition, there is computer-aided detection (CAD) software in which abnormalities are automatically detected in the medical image data by computer and these CAD results are presented to the medical professional. Many times these image processing applications come from different vendors.

One such area of medical image processing is virtual colonography (VC). VC uses x rays and computers to produce two- and three-dimensional images of the colon (large intestine) from the lowest part, the rectum, all the way to the lower end of the small intestine and display them on a screen. The procedure is used to diagnose colon and bowel disease, including polyps, diverticulosis, and cancer. VC can be performed with computed tomography (CT). A CT Colon CAD system typically consists of two parts: 1) the CAD algorithm which identifies suspicious areas, and 2) a three-dimensional workstation with visualization software which is used to display the CAD marks.

Using VC as an example, the visualization software will process the three-dimensional image data and render a virtual view of the large bowel for presentation and review by a medical professional. In order to render the large bowel, certain preprocessing steps are required. The anatomical region of interest, the colon in this case, must be segmented from the rest of the image data. It may also be necessary to electronically remove fluid and/or stool from the colon region. Next, the visualization software can take the segmented, electronically cleansed colon image data and render a three-dimensional model for display. At the same time, a CAD application is used to detect polyps in the colon. The CAD application must first segment the colon and electronically cleanse it in the same way the visualization application was required to do. Once this has been done, a detection algorithm will be used to find suspicious polyps in the colon image data.

Therefore, a necessary step for both CAD processing and visualization is segmenting the colon. Currently, this is done independently by the CAD software and the visualization workstation. The resulting colon segmentations may not be identical, and may in fact have large differences if the colon is poorly distended or if significant sections of the small bowel are improperly included. As a result, CAD may mark areas for review that are not located in the version of the segmented colon that is used for three-dimensional visualization, and will therefore unavailable for review.

With independent colon segmentations it is possible for the CAD algorithm to place marks in locations not displayed by the visualization software. It is possible that the undisplayed CAD marks are irrelevant; for example, if the marks exist in the small bowel incorrectly included in the CAD's colon segmentation. However, it is possible that the marks are important. For example, if the marks are located in a section of colon that was incorrectly excluded by the visualization software's colon segmentation.

Therefore, there is a need for all CAD marks to be reviewed, by first alerting the user that certain marks were omitted from the three-dimensional visualization display and then directing the user to the omitted marks on the two-dimensional medical image slices.

### BRIEF SUMMARY OF THE INVENTION

According to the present invention, a system and method for preserving CAD marks falling outside the three-dimensional rendering on a visualization display following segmentation of CT medical image slices for review by a user is disclosed. The CT medical images are processed by both a CAD algorithm and a visualization workstation. The CAD algorithm reports detected suspicious regions to the visualization workstation for display on the three-dimensional rendering of the medical images as well as creates a list of the detections to notify the user. If the detected CAD marks are not located on the three-dimensional rendering of the medical images, the user is notified. The user can the view the detected CAD marks on the two-dimensional CT medical images.

In accordance with one embodiment of the present invention, the CAD marks found outside the three-dimensional rendering medical images following segmentation by the visualization software of the CT medical image slices are preserved for review by a user.

Accordingly, it is a feature of the embodiments of the present invention to identify and highlight detected CAD marks falling outside the three-dimensional visualization of the medical images displayed on a workstation following segmentation by the CAD algorithm and visualization software.

It is another feature of the embodiments of the present invention to make the detected CAD marks falling outside of the three-dimensional visualization of the medical image displayed on a workstation reviewable to a user on the two-dimensional medical image slices. Other features of the embodiments of the present invention will be apparent in light of the description of the invention embodied herein.

### BRIEF DESCRIPTION OF THE SEVERAL VIEWS OF THE DRAWINGS

The following detailed description of specific embodiments of the present invention can be best understood when read in conjunction with the following drawings, where like structure is indicated with like reference numerals and in which:

Fig. 1 is a flow chart illustrating the flow of data according to an embodiment of the present invention.

Fig. 2 illustrates displaying a suspicious CAD mark on a three-dimensional rendering of the CT medical images according to an embodiment of the present invention.

Fig. 3 illustrates marking a suspicious CAD mark on a two-dimensional medical image according to an embodiment of the present invention.

### DETAILED DESCRIPTION

In the following detailed description of the embodiments, reference is made to the accompanying drawings that form a part hereof, and in which are shown by way of illustration, and not by way of limitation, specific embodiments in which the invention may be practiced. It is to be understood that other embodiments may be utilized and that logical, mechanical and electrical changes may be made without departing from the spirit and scope of the present invention.

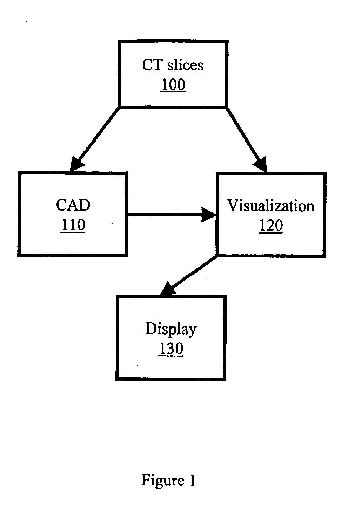

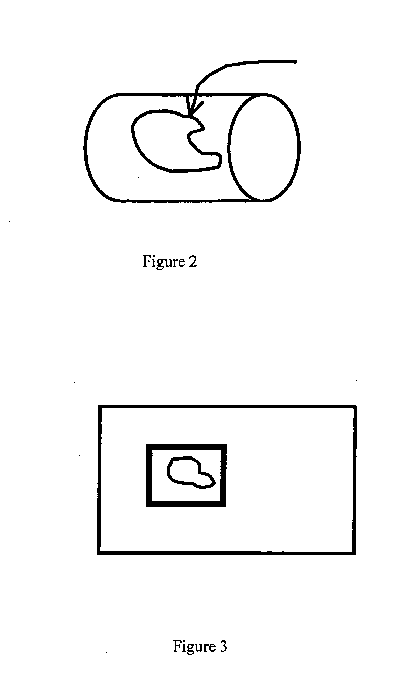

Referring initially to Fig. 1, when a CT medical image case is processed in step 100, both the visualization workstation 120 and the CAD algorithm 110 segment the medical images. The CT medical images can be taken from a colon or any other anatomical region that may benefit from CAD processing. The CAD algorithm 110 further examines the medical images for suspicious regions and reports the results to the visualization workstation 120 for display 130. On the workstation 120, the suspicious regions from the CAD algorithm are indicated on display 130 for the three-dimensional rendering or visualization of the anatomical region (for example, referring to Fig. 2, with an arrow pointing to the suspicious region) and for the two-dimensional slices of the anatomical region (for example, referring to Fig. 3, with a box surrounding the suspicious region). Additionally, a complete list of CAD marks found on the CT medical images is provided to the user on the display 130. This list of detections allows the user to jump directly to any CAD mark by selecting, or highlighting, a listed CAD mark.

It is possible for a CAD mark to not be visible in the displayed three-dimensional rendering, or visualization, particularly if the medical image segmentations of the visualization software and the CAD algorithm differ. In this case, the user can be alerted to CAD marks that fall outside the three-dimensional rendering of the anatomical region and that the CAD marks are not visible in the display of three-dimensional rendering, or visualization, so that the user knows to refer back to the two-dimensional CT medical image slices for the primary read. The CAD marks not visualized on the three-dimensional rendering could be differentiated on the display of the CAD list of detections (for example, in a different color). Additionally, a dialog box alerting the user may pop up in the display 130 if the user selects a CAD mark from the list of detections that falls outside the three-dimensional rendering of the anatomical region segmented by the visualization workstation software.

It is noted that terms like "preferably," "commonly," and "typically" are not utilized herein to limit the scope of the claimed invention or to imply that certain features are critical, essential, or even important to the structure or function of the claimed invention. Rather, these terms are merely intended to highlight alternative or additional features that may or may not be utilized in a particular embodiment of the present invention.

Having described the invention in detail and by reference to specific embodiments thereof, it will be apparent that modifications and variations are possible without departing from the scope of the invention defined in the appended claims. More specifically, although some aspects of the present invention are identified herein as preferred or particularly advantageous, it is contemplated that the present invention is not necessarily limited to these preferred aspects of the invention.

## Claims

1. A method of displaying computer-aided detection marks on medical imagery, the method comprising:
segmenting a series of computed tomography medical images by a computer-aided detection algorithm and visualization workstation software;
reporting suspicious regions detected by the computer-aided detection algorithm to the visualization workstation; and
alerting a user if a detected suspicious region is not visible on the segmented depiction on the visualization workstation.

2. The method of claim 1, wherein the medical imagery is taken from the colon.

3. The method of claim 1, wherein the step of alerting the user differentiates non-visible suspicious regions by listing the suspicious regions in a different color on a list of suspicious regions than the visible suspicious regions.

4. The method of claim 1, wherein the step of alerting the user pops up a dialog box on the visualization workstation display when the user selects a non-visible suspicious region from a list of suspicious regions.

5. The method of claim 1, further comprising:
displaying suspicious regions detected by the computer-aided detection algorithm on the visualization workstation.

6. The method of claim 1, further comprising:
displaying suspicious regions as well as a list of all of the suspicious regions detected by the computer-aided detection algorithm on the visualization workstation.

7. The method of claim 1, further comprising:
providing a list of suspicious regions to the visualization workstation for display.

8. The method of claim 7, further comprising:
selecting a suspicious region to view from the list of suspicious regions; and
jumping to a display of that suspicious region on the medical imagery displayed on the visualization workstation after selection of the suspicious region.

9. The method of claim 1, further comprising:
providing a list of suspicious regions to the visualization workstation for display;
selecting a suspicious region to view from the list of suspicious regions; and
jumping to a display of that suspicious region on the medical imagery displayed on the visualization workstation after selection of the suspicious region.

10. The method of claim 9, wherein the step of selecting a suspicious region is through the use of user-invoked controls.

11. The method of claim 10, wherein the user-invoked controls comprise a computer mouse, a touch screen, a pen stylus, a display button, or combinations thereof.

12. The method of claim 1, further comprising:
reviewing non-visible suspicious regions on the two-dimensional computed tomography medical images.

13. The method of claim 1, further comprising:
displaying both the segmented three-dimensional and two-dimensional renderings of the computed tomography medical images on the workstation display.

14. The method of claim 13, further comprising:
marking the computer-aided detected suspicious regions on the segmented three-dimensional and two-dimensional renderings of the computed tomography medical images on the workstation display.

15. The method of claim 14, further comprising:
marking the computer-aided detected suspicious regions on the segmented three-dimensional on the workstation display with arrows pointing to the computer-aided detected suspicious regions.

16. The method of claim 14, further comprising:
marking the computer-aided detected suspicious regions on the two-dimensional renderings of the computed tomography medical images on the workstation display with boxes surrounding the computer-aided detected suspicious regions.

17. The method of claim 1, further comprising:
examining the series of computed tomography medical images for suspicious regions using the computer-aided detection algorithm.

18. A method of displaying computer-aided detection marks on medical imagery, the method comprising:
segmenting a series of computed tomography medical images by a computer-aided detection algorithm and visualization workstation software;
reporting suspicious regions detected by the computer-aided detection algorithm to the visualization workstation;
providing a list of suspicious regions to the visualization workstation;
selecting a suspicious region to view from the list of suspicious regions;
alerting a user if the selected suspicious region is not visible on the displayed segmented depiction on the visualization workstation; and
jumping to a display of that suspicious region on the medical imagery displayed on the visualization workstation after selection of the suspicious region.

19. The method of claim 18, further comprising:
displaying suspicious regions detected by the computer-aided detection algorithm on the visualization workstation.

20. The method of claim 18, further comprising:
displaying a list of suspicious regions detected by the computer-aided detection algorithm on the visualization workstation.

21. The method of claim 18, further comprising:
displaying suspicious regions as well as a list of all of the suspicious regions detected by the computer-aided detection algorithm on the visualization workstation.

22. The method of claim 18, further comprising:
examining the series of computed tomography medical images for suspicious regions using the computer-aided detection algorithm.

23. The method of claim 18, further comprising:
displaying both three-dimensional segmented and two-dimensional renderings of the computed tomography medical images on the workstation display.

24. The method of claim 23, further comprising:
marking the computer-aided detected suspicious regions on the segmented three-dimensional and two-dimensional renderings of the computed tomography medical images on the workstation display.

25. The method of claim 23, further comprising:
reviewing the selected non-visible suspicious regions on the two-dimensional computed tomography medical images.

26. A system for displaying computer-aided detection marks on medical imagery, the system comprising:
a computed tomography medical images processor for processing the medical imagery;
a visualization workstation, wherein the visualization workstation comprises software that segments the computed tomography medical images and wherein the visualization workstation displays the processed segmented computed tomography medical images; and
a computer-aided detection algorithm, wherein the computer-aided detection algorithm segments the computed tomography medical images, examines the computed tomography medical images for suspicious regions, reports the suspicious regions to the visualization workstation, and alerts a user if a suspicious region is not visible on the segmented depiction on the visualization workstation.

27. The system of claim 26, wherein the visualization workstation displays both three-dimensional and two-dimensional renderings of the computed tomography medical images.

28. The system of claim 26, wherein the visualization workstation displays both three-dimensional and two-dimensional renderings of the computed tomography medical images with the computer-aided detected suspicious regions marked on the segmented three-dimensional and two-dimensional renderings of the computed tomography medical images on the workstation display.

29. The system of claim 26, wherein the computer-aided detection algorithm provides a list of suspicious regions to the visualization workstation for display

30. The system of claim 29, wherein the computer-aided detection algorithm alerts the user by differentiating non-visible suspicious regions from the visible suspicious regions on the list of suspicious regions by using different colors.

31. The system of claim 29, wherein the computer-aided detection algorithm alerts the user by popping up a dialog box when the user selects a non-visible suspicious region from the list of suspicious regions.
